# EUROPEAN PATENT SPECIFICATION

(11) **EP 1 897 640 B1**
(45) Date of publication and mention of the grant of the patent: **25.03.2009**
(21) Application number: 07017505.4
(22) Date of filing: 06.09.2007
(51) Int. Cl.: B23B 3/16, B23Q 39/02

(54) **Machine tool**
Maschinenwerkzeug
Machine-outil

(30) Priority: 08.09.2006 JP 2006244670
(43) Date of publication of application: 12.03.2008
(73) Proprietor: Mori Seiki Co., Ltd., Yamatokoriyama-shi, Nara-ken 639-1183 (JP)
(72) Inventor: Yamane, Masahiro, Yamatokoriyama-shi Nara-ken 639-1183 (JP); Ishiguro, Haruki, Yamatokoriyama-shi Nara-ken 639-1183 (JP)
(74) Representative: Grünecker, Kinkeldey, Stockmair & Schwanhäusser Anwaltssozietät

(56) References cited:
- EP-A- 0 538 515

## Description

The present invention relates to a machine tool equipped with a spindle headstock gripping and rotating a workpiece and a turret having many tools radially disposed thereto on a bed thereof according to the preamble of claim 1.

As a conventional machine tool provided with a turret, there is one including a slant-type bed having a slant face slanting in a manner that a near side thereof becomes lower when viewed from a front side of the machine, a spindle headstock disposed at one side portion of the bed, a first turret disposed at a lower portion positioned at a near side of the slant face, and a second turret disposed at a higher portion positioned at a distant side of the slant face.
[Patent document 1] EP Patent No. 0538515B1

In the above-described machine tool provided with the slant-type bed, it is possible to structure the turret to be movable in the Y-axis direction being orthogonal to a plane (plane in parallel with the slant face) including the X-axis and the Z-axis without problems with regard to the second turret disposed at the higher portion of the slant face, as described in Patent document 1 above. However, in the case of the first turret disposed at the lower portion of the slant face, a space is needed to be ensured at the rear side to dispose a Y-axis driving mechanism, and as a result thereof, the entire machine is caused to increase in size, being a problem.

The present invention has been made in consideration of the above-described conventional problem, and an object thereof is to provide a machine tool that can be structured so that a turret disposed at a lower portion of a slant face is movable in the Y-axis direction without increasing the entire machine in size.
The above and other objects of the invention are achieved by a machine tool according to claim 1. Preferred embodiments are claimed in the dependent claims.

In the present invention, a machine tool includes: a slant-type bed slanting in a manner that a near side thereof becomes lower when viewed from a front side of the machine; a spindle headstock disposed at one side portion of the bed; a first turret disposed at a lower portion positioned at the near side of the bed in a movable manner in an X-axis direction being orthogonal to an axis line of the spindle headstock and a Z-axis direction in parallel with the axis line; and a second turret disposed at a higher portion positioned at a distant side of the bed in a movable manner in the X-axis direction and the Z-axis direction, in which the first turret includes a base member disposed on the bed in a movable manner in the Z-axis direction, a slide base disposed on the base member in a movable manner in the X-axis direction, a pair of X-axis feed mechanisms moving the slide base in the X-axis direction, a ram disposed at a portion of the slide base between the pair of X-axis feed mechanisms in a movable manner in a Y-axis direction being orthogonal to a plane including the X-axis and the Z-axis, and a turret body and a turret head mounted onto the ram.

In the present invention, the ram is disposed between the right and left X-axis feed mechanisms, therefore the size of the ram protruding to the back face side in the Y-axis direction can be reduced to the extent of the size of the X-axis feed mechanism in the Y-axis direction, so that the ram can be structured to be movable in the Y-axis direction while disposed at the lower portion being the near side of the slant-type bed, which cannot afford enough space in view of the size from the near-side to the distant-side (in the Y-axis direction), by preventing the entire machine from increasing in size.

In a preferred embodiment according to the present invention, a Y-axis driving unit moving the ram in the Y-axis direction is coupled with the lower end portion of the ram, and the Y-axis driving unit is disposed between the right and left X-axis feed mechanisms.

In the embodiment describing the above characteristics, the Y-axis driving unit is positioned between the right and left X-axis feed mechanisms, therefore, it is possible to dispose the Y-axis driving unit by making use of the size of the X-axis feed mechanisms in the Y-axis direction, so that the ram can be structured to be movable in the Y-axis direction while preventing the entire machine from increasing in size.

In another preferred embodiment according to the present invention, the Y-axis driving unit includes a nut member fixed to the lower end portion of the ram, a ball screw screwed into the nut member, and a Y-axis feed motor coupled to the ball screw, in which the Y-axis feed motor and the ball screw are disposed in parallel with the ram, and when viewed in the direction orthogonal to the Y-axis, the lower end portion of the ram and most of the ball screw and the Y-axis feed motor are disposed in an escape opening formed in the base member in a mutually lapping manner.

In the embodiment describing the above characteristics, the Y-axis feed motor and the ball screw of the Y-axis driving unit are disposed in parallel with the ram, and when viewed in the direction orthogonal to the Y-axis direction, the lower end portion of the ram and most of the ball screw and the Y-axis feed motor are disposed in the escape opening formed in the base member in a mutually lapping manner, in which the size of the ram and the driving unit protruding to the rear side in the Y-axis direction can be reduced to the extent of the size of the base member in the Y-axis direction, so that the ram can be disposed at the lower portion of the slant in a movable manner in the Y-axis direction while further preventing the machine from increasing in size.

In still another preferred embodiment according to the present invention, a ram guide supporting the ram in a slidable manner is formed from the slide base in a protruding manner in the Y-axis direction, the protruded portion having a circular shape when viewed in transverse section.

In the embodiment describing the above characteristics, the ram guide protruding from the slide base to the Y-axis direction is formed into a circle when viewed in traverse section while supporting the ram in a slidable manner, in which the cutting dusts can easily slip down along the outer peripheral face of the ram guide, so that the cutting dusts can be prevented from accumulating.

In still another preferred embodiment according to the present invention, a cylindrical guide cover surrounding an outer peripheral of the ram guide is fitted to the ram guide in an axially slidable manner and an upper end portion of the guide cover is connected and fixed to the turret body being mounted onto the ram or an upper end portion of the ram.

In the embodiment describing the above characteristics, the cylindrical guide cover is fitted to the ram guide in a slidable manner, and the upper end portion of the guide cover is connected and fixed to the ram side, so that the ram and the ram guide can prevent the cutting dusts, coolant and the like from entering into the slide faces thereof.

In still another preferred embodiment according to the present invention, the ram has a polygonal shape and faces composing plural sides of the polygon are slide faces, slider mounting faces are formed on an inner peripheral face of the ram guide, and sliders are mounted onto the slider mounting faces in parallel with the slide faces.

In the embodiment describing the above characteristics, the ram has the polygonal shape, and the faces composing the plural sides of the polygon are the slide faces, and the sliders contacting the slide faces in a sliding manner are mounted onto the ram guide, so that the ram can be positioned surely by making use of the plural sides of the polygon, allowing rotation stopper to be eliminated.

FIG. 1 is a front perspective view of a turret lathe according to one embodiment of the present invention;
FIG. 2 is a left side view of the lathe;
FIG. 3 is a right side view of the lathe;
FIG. 4 is a plan view of a first turret portion of the lathe;
FIG. 5 is a sectional front view (a sectional view taken along a V-V line in FIG. 4) of the first turret portion of the lathe;
FIG. 6 is a sectional side view to illustrate an attachment/detachment work of the first Y-axis driving unit of the first turret of the lathe;
FIG. 7 is a sectional front view showing a mounted state of the first Y-axis driving unit of the first turret of the lathe; and
FIG. 8 is a perspective view showing a mounted state of the first Y-axis driving unit of the first turret of the lathe.

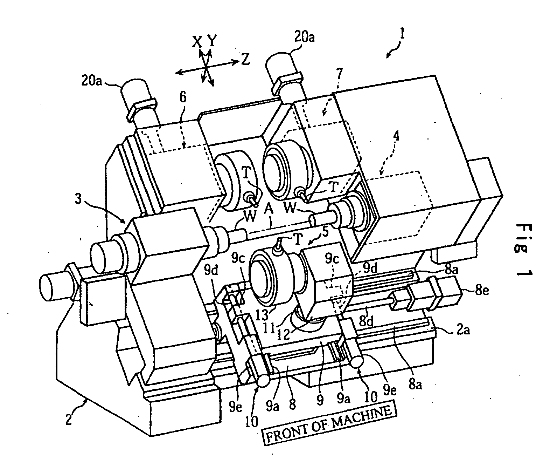

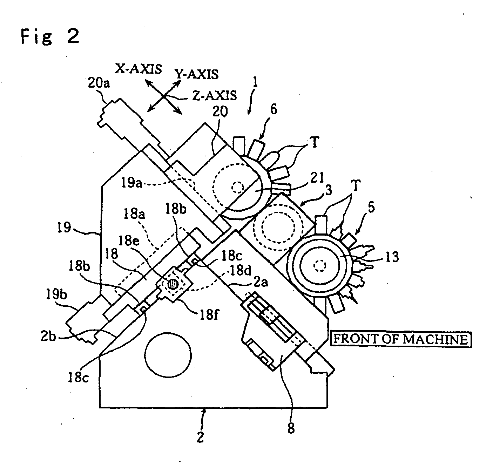

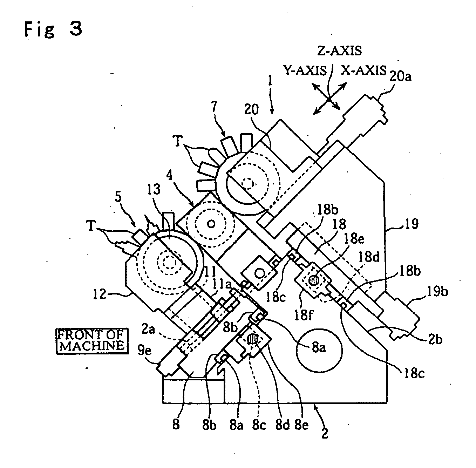

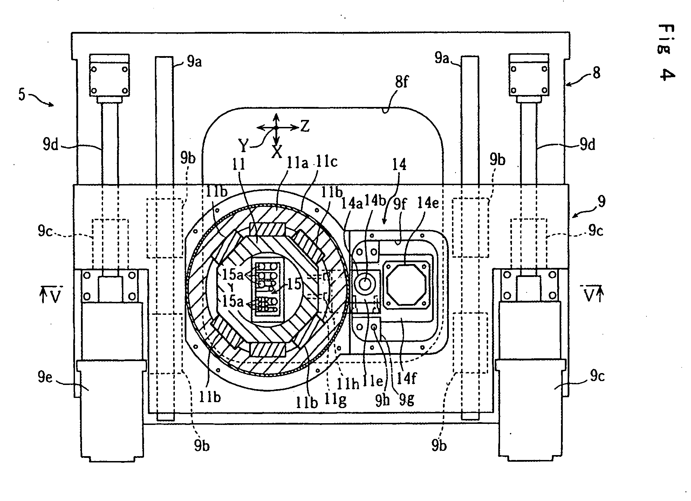

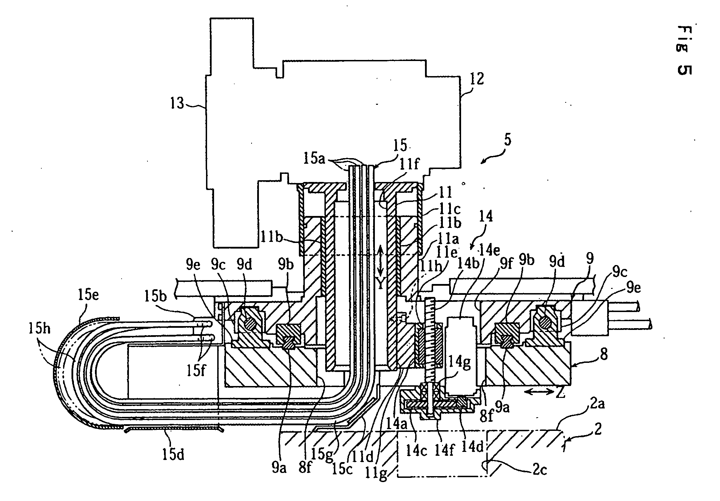

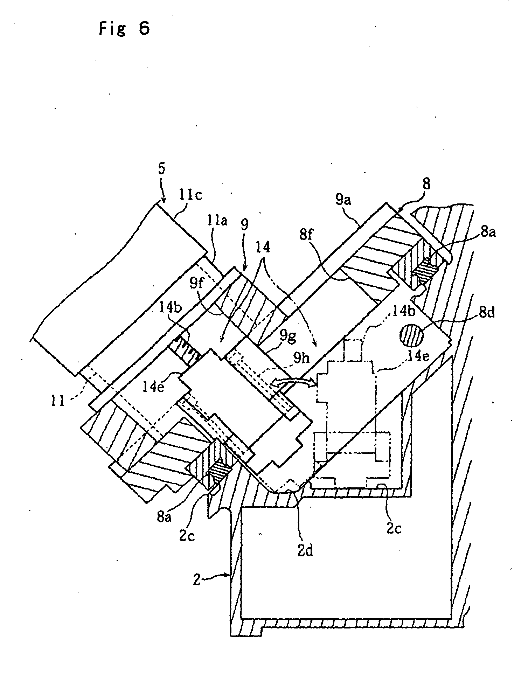

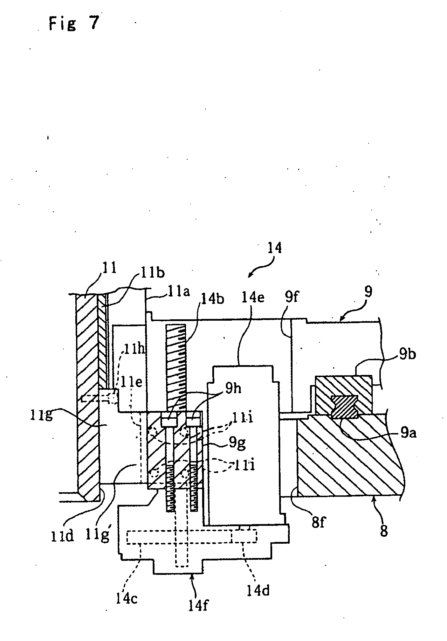

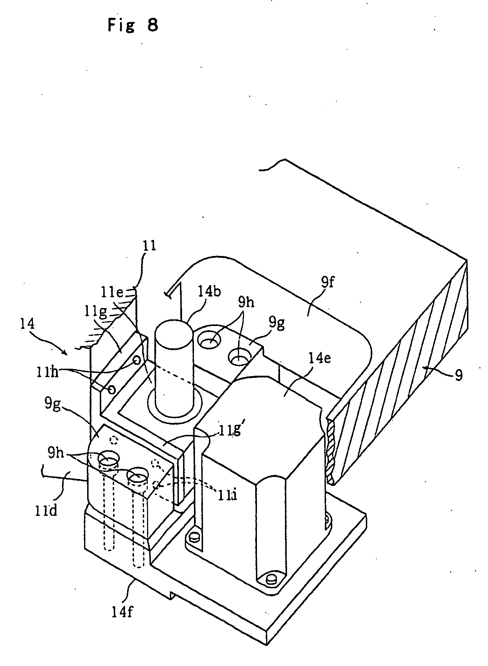

Hereinafter, embodiments according to the present invention will be described with reference to the attached drawings. FIGs. 1 to 8 are drawings to illustrate a turret lathe according to one embodiment of the present invention.

In the drawings, "1" denotes a turret lathe according to one embodiment of the present invention, and the turret lathe 1 includes a slant-type bed 2 slanting in a manner that the near side thereof becomes lower when viewed from the front of a machine, a first spindle headstock 3 disposed at the left side portion of the bed 2, a second spindle headstock 4 disposed at the right side portion in a movable manner in the Z-axis direction to be coaxial with the first spindle headstock 3, a first turret 5 disposed at the lower portion positioned at the near side of the bed 2 in a movable manner in the X-axis, Y-axis and Z-axis directions, and second and third turrets 6, 7 disposed at the higher portion positioned at the distant side of the bed 2 in a movable manner in the X-axis, Y-axis and Z-axis directions.

Here, the X-axis is a direction orthogonal to an axial line A of the first and second spindle headstocks 3, 4 and in parallel with a later-described first slant face 2a, meaning a front and rear direction when viewed from the front of the machine. Further, the Z-axis is a direction in parallel with the axial line A, meaning a right and left direction when viewed from the front of the machine. Furthermore, the Y-axis is a direction orthogonal to a plane including the X-axis and the Z-axis, meaning a direction orthogonal to the first slant face 2a.

The bed 2 is shaped into substantially a right-angle triangle when viewed from the right or left side direction toward the Z-axis direction and includes the first slant face 2a positioned at the near side when stood in front of the machine and a second slant face 2b positioned at the rear side and orthogonal to the first slant face 2a. The first turret 5 is disposed on the first slant face 2a in a movable manner in the directions in parallel with the first slant face 2a and orthogonal to the first slant face 2a. Further, the second and third turrets 6, 7 are disposed on the second slant face 2b in a movable manner in the directions in parallel with the second slant face 2b and orthogonal to the second slant face 2b.

Since the second turret 6 and the third turret 7 have substantially the same structure, the same numerical references are used for the same or corresponding portions, and the description will be given mainly of the structure of the second turret 6.

The second turret 6 includes a base member 18 disposed on the second slant face 2b of the bed 2 in a movable manner in the Z-axis direction, a column 19 disposed on a slide face 18a being in parallel with the second slant face 2b of the base member 18 in a movable manner in the Y-axis direction, a turret body 20 disposed on a slide face 19a being in parallel with the first slant face 2a of the column 19 in a movable manner in the X-axis direction, and a turret head 21 disposed to the turret body 20 to be rotary indexable and having many tools T.

The base member 18 moves forward and backward by fitting the linear guides 18b fixed thereto to linear guide rails 18c, 18c fixed onto the second slant face 2b extending in the Z-axis direction in a freely slidable manner, and at the same time, by inserting a ball screw 18e in a screwing manner into a nut member 18d fixed to the base member 18 and by driving the ball screw 18e to rotate by a second Z-axis feed motor 18f fixed to the second slant face 2b side.

The column 19 is driven to move forward and backward in the Y-axis direction by a second Y-axis feed motor 19b fixed to the base member 18 side. Further, the turret body 20 is driven to move forward and backward by a second X-axis feed motor 20a fixed to the column 19 side.

The first turret 5 includes a base member 8 disposed on the first slant face 2a of the bed 2 in a movable manner in the Z-axis direction, a slide base 9 disposed on the base member 8 in a movable manner in the X-axis direction, a pair of right and left first X-axis feed mechanisms 10, 10 moving the slide base 9 in the X-axis direction, a ram 11 disposed at the portion of the slide base 9 and between the pair of feed mechanisms 10, 10 in a movable manner in the Y-axis direction, a turret body 12 mounted onto the ram 11, and a turret head 13 mounted onto the turret body 12.

The turret head 13 is of a thick plate of a polygonal shape with a variety of tools T mounted onto the outer peripheral portion thereof. The turret body 12 has a built-in indexing mechanism indexing and thereby positioning the turret head 13 so that a predetermined tool is positioned at a processing position, and a built-in driving mechanism driving the respective tools. Accordingly, as will be described later, a bundle of supplying hoses 15 composed of a power supply cable, and hoses for supplying coolant and oil pressure, and the like is connected to the turret body 12.

The structure of the first turret 5 will be described in more detail. A pair of linear guide rails 8a, 8a extending in the Z-axis direction are fixedly disposed at the lower portion positioned at the near side of the first slant face 2a of the bed 2, and linear guides 8b, 8b fixed to the bottom face of the base member 8 are fitted to the linear guide rails 8a, 8a in a freely slidable manner. Further, a ball screw 8d extending in the Z-axis direction is screwed into a nut member 8c fixed to the bottom face of the base member 8. A first Z-axis feed motor 8e is connected to the right end portion of the ball screw 8d, and the motor 8e is fixed to the first slant face 2a side of the bed 2. By the rotation of the first Z-axis feed motor 8e, the base member 8 moves forward and backward in the Z-axis direction.

A pair of linear guide rails 9a, 9a extending in the X-axis direction are fixedly disposed onto the base member 8 and right and left linear guides 9b, 9b fixed to the bottom surface of the slide base 9 are fitted in a freely slidable manner thereto. Further, in right and left side portions of the slide base 9, right and left nut members 9c, 9c are formed and ball screws 9d, 9d extending in the X-axis direction are screwed in the nut members 9c, 9c. First X-axis feed motors 9e, 9e are connected to the near-side end portions of the ball screws 9d, 9d, and the motors 9e, 9e are fixed to the base member 8 side. The above-described pair of right and left first X-axis feed mechanisms 10, 10 are composed of the right and left linear guide rails 9a, 9a, the right and left linear guides 9b, 9b, the right and left nut members 9c, 9c, the right and left ball screws 9d, 9d, and the right and left first X-axis feed motors 9e, 9e, respectively. By the rotation of the first X-axis feed motors 9e, 9e, the slide base 9 moves forward and backward in the X-axis direction.

A ram guide 11a is disposed in a standing manner at the portion of the slide base 9 and between the right and left first X-axis feed mechanisms 10, 10 so as to protrude upward. The ram guide 11a has a cylindrical shape and its outer peripheral face has a circular transverse section, and the ram 11 I has a cylindrical shape and its outer peripheral face has an octagonal transverse section. Between the respective side portions forming the outer peripheral face of the ram 11 and the inner peripheral face of the ram guide 11a, sliders 11b being plural bearing members extending in the axial direction are inserted, and thereby, the ram 11 is supported by the slide base 9 in a slidable manner in the Y-axis direction to move in the X-axis direction and Z-axis direction together with the slide base 9.

The turret body 12 is fixed to the upper end portions of the ram 11. Further, a guide cover 11c of a cylindrical shape is attached to the ram guide 11 a in a freely slidable manner in the Y-axis direction, and the upper end portion of the cover 11c is fixed to the lower surface of the turret body 12. Thus, cutting dusts and coolants are prevented from entering into sliding surfaces of the ram 11 and the ram guide 11a.

Since the outer peripheral face of the ram guide 11a is the circle, the cutting dusts and the like easily slip down from the upper edge of the outer peripheral face of the ram guide 11a despite the ram guide 11a protruding from the slanting slant face 2a, so that the cutting dusts and the like are prevented from accumulating around the upper edge.

A first Y-axis driving unit 14 is coupled to a lower end portion 11d of the ram 11. In detail, a bracket 11g is fixed in a clamped manner to the lower end portion 11d by a bolt 11h, and a nut holder 11e holding a nut member 14a of the first Y-axis driving unit 14 is fixed to a flange portion 11 g' protruding in the Z-axis direction of the bracket 11g by mounting bolts 11i in an attachable/detachable manner. Further, a ball screw 14b extending in the Y-axis direction is screwed into the nut member 14a. A transmission gear 14c for transmitting torque is fixed to the lower end portion of the ball screw 14b, and a driving gear 14d fixed to an output shaft of a first Y-axis feed motor 14e is engaged with the transmission gear 14c. The ball screw 14b is supported by a casing 14f via a bearing 14g in a relatively rotatable manner and in an axially unmovable manner. Further, the first Y-axis feed motor 14e is fixedly supported by the casing 14f. The casing 14f is mounted onto a both portion 9g formed in the slide base 9 via mounting bolts 9h in an attachable/detachable manner.

Here, the ram 11, the ball screw 14b, and the Y-axis feed motor 14e are disposed in parallel with each other and in a state of inserted into an escape opening 8f formed in the base member 8. In other words, when viewed in the direction orthogonal to the Y-axis, the lower end portion 11d of the ram 11 and most part of the ball screw 14b and the Y-axis feed motor 14e are lapping each other, and further lapping the peripheral edge of the escape opening 8f.

Further, the nut member 14a including the nut holder 11e, the ball screw 14b including the casing 14f, the respective gears 14c, 14d and the Y-axis feed motor 14e compose the first Y-axis driving unit 14 moving the ram 11, and further the turret body 12 and the turret head 13 forward and backward in the Y-axis direction.

Here, the escape opening 8f formed in the base member 8 is shaped into substantially a square in plan view, and set to have a size not interfering the Y-axis driving unit 14 and the like even when the lower end portion 11d of the ram 11 and the first Y-axis driving unit 14 move to the extent of the maximum stroke in the X-axis direction of the slide base 9. Further, the escape opening 8f is set to have a size and a shape not interfering when standing and falling the unit 14 in a later-described accommodating recessed portion 2c when attaching/detaching the first Y-axis driving unit 14

Further, the first Y-axis driving unit 14 is disposed in a maintenance opening 9f formed in the slide base 9 such that it is seeable from the above, so that the mounting bolts 9h of the slide base 9 of the first Y-axis driving unit 14 and the mounting bolts 11i of the bracket 11g of the nut holder 11e are attachable/detachable by inserting a tool from above the slide base 9.

At the right side portion of the first slant face 2a of the bed 2, the previously-described accommodating recessed portion 2c is formed. The accommodating recessed portion 2c is for a temporal accommodation at the time of the attachment/detachment works of the first Y-axis driving unit 14, and formed to have a shape, a depth and the like allowing for movement of the first turret 5 in the Z-axis direction while the first turret 5 is in the state of accommodating the unit 14. Further, a mounting portion 2d is formed in a neighboring manner to the accommodating recessed portion 2c, and when the first driving unit 14 is detached, it is temporarily placed on this mounting portion 2d.

Specifically, when detaching the first Y-axis driving unit 14, the mounting bolts 9h and the mounting bolts 11i are removed and the first Y-axis driving unit 14 is temporarily placed on the mounting portion 2d in a slanting state, and subsequently, the first Y-axis driving unit 14 is made to stand up and the first turret 5 is moved in the Z-axis direction as it is. Backed by this, the accommodating recessed portion 2c and the first Y-axis driving unit 14 accommodated in the accommodating recessed portion 2c are exposed outside. In this state, it is possible to perform required maintenance by removing the first Y-axis driving unit 14 outside the machine. Note that the attachment work of the Y-axis driving unit 14 is performed in reverse order of the above detachment work.

The turret body 12 is connected with a bundle of supplying hoses 15 composed of many supplying hoses, 15a, ... for supplying power, coolant and oil pressure necessary for an indexing mechanism and a tool driving mechanism built therein. The bundle of supplying hoses 15 goes through a through hole 11f of the ram 11, extends downward of the ram, bent in the Z-axis direction here, extends further in the Z-axis direction by going through between the base member 8 and the bed 2, makes a u-turn upward at the side of the base member 8, and fixed to the slide base 9 by a claming member 15b.

Further, under the ram 11, a guide plate 15c to be a guide when bending a bending portion 15g of the bundle of supplying hoses 15 from the Y-axis direction to the Z-axis direction is disposed. Further, under and at the side of the previously-described u-turn portion 15h of the bundle of supplying hoses 15, a guide plate 15d and a guide plate 15e of a u-shape to serve as a guide when making the u-turn portion 15 upwardly are disposed, respectively. These guide plates 15c to 15e are supported by the slide base 9 and move together with the slide base 9. Note that, as to the guide plate 15d, a shape along with a bent R of the bundle of supplying hoses 15 is also acceptable.

As described above, in the present embodiment, when structuring the ram 11 to be movable in the Y-axis direction, since the ram 11 is disposed between the right and left X-axis feed mechanisms 10, 10 requiring relatively large disposing spaces in the Y-axis direction, the ram 11 can be disposed without protruding to the rear side by making use of the size in the Y-axis direction of the X-axis feed mechanisms 10, 10, and also the ram 11 can be disposed at the lower portion being the near side of the slant-type bed 2, which cannot afford enough space in view of the size from the near-side to the distant-side (in the Y-axis direction), while preventing the entire machine from increasing in size.

Further, the Y-axis driving unit 14 is positioned between the right and left X-axis feed mechanisms 10, 10, allowing the Y-axis driving unit 14 to be disposed by making use of the size in the Y-axis direction of the X-axis feed mechanisms 10, 10, so that the entire machine can be prevented from increasing in size.

More specifically, the Y-axis feed motor 14e of the Y-axis driving unit 14 and the ball screw 14b are disposed in parallel with the ram 11, and when viewed in the direction orthogonal to the Y-axis, the lower end portion 11d of the ram 11, most of the ball screw 14b and the Y-axis feed motor 14e are disposed in the escape opening 8f formed in the base member 8 in a mutually lapping manner, in which the protruding size of the ram 11 and the driving unit 14 in the Y-axis direction toward the rear side can be reduced to the extent of the size in the Y-axis direction of the base member 8, so that the ram 11 can be disposed at the lower portion of the slant in a movable manner in the Y-axis direction while preventing the entire machine from increasing in size.

Further, the ram guide 11a supporting the ram 11 in a slidable manner is disposed to protrude in the Y-axis direction from the slide base 9, and at the same time, is formed to have a circular shape in traverse section, allowing the cutting dusts to easily slip down along with the outer peripheral face of the ram guide 11a, and accordingly, the cutting dusts can be prevented from accumulating.

Furthermore, the cylindrical guide cover 11c is fitted to the ram guide 11a in a slidable manner, so that the cutting dusts, coolant and the like can be prevented from entering into the sliding faces of the ram 11 and the ram guide 11a.

The ram 11 is shaped into the octagon and the faces composing the plural sides of the octagon is formed into the slide faces, and the sliders 11b contacting the slide faces in a sliding manner are mounted onto the ram guide 11a, so that the ram 11 can be positioned and supported surely backed by a wedge effect generated in that the sliders 11b supporting the slide faces composing the octagon of the ram 11 form the v-shapes.

The invention may be embodied in other specific forms without departing from the spirit or essential characteristics thereof.

The present embodiments are therefore to be considered in all respects as illustrative and no restrictive, the scope of the invention being indicated by the appended claims rather than by the foregoing description.

## Claims

1. A machine tool comprising: a slant-type bed (2) slanting in a manner that a near side thereof becomes lower when viewed from a front side of the machine; a spindle headstock (3) disposed at one side portion of said bed (2); a first turret (5) disposed at a lower portion positioned at the near side of said bed (2) in a movable manner in an X-axis direction being orthogonal to an axis line of said spindle headstock (3) and a Z-axis direction in parallel with the axis line; and a second turret (6) disposed at a higher portion positioned at a distant side of said bed (2) in a movable manner in the X-axis direction and the Z-axis direction, wherein
said first turret (5) includes a base member (8) disposed on said bed (2) in a movable manner in the Z-axis direction, a slide base (9) disposed on the base member (8) in a movable manner in the X-axis direction, a pair of X-axis feed mechanisms (10, 10) moving the slide base (9) in the X-axis direction, **characterized in that** said first turret includes a ram (11) disposed at a portion of the slide base (9) and between said pair of X-axis feed mechanisms (10, 10) in a movable manner in a Y-axis direction being orthogonal to a plane including the X-axis and the Z-axis, and a turret body (12) and a turret head (13) mounted onto the ram (11).

2. The machine tool according to claim 1, wherein a Y-axis driving unit (14) moving the ram (11) in the Y-axis direction is coupled to a lower end portion (11 d) of the ram (11) and the Y-axis driving unit (14) is disposed between the right and left X-axis feed mechanisms (10, 10).

3. The machine tool according to claim 2, wherein said Y-axis driving unit (14) includes a nut member (14a) fixed to the lower end portion (11 d) of the ram (11), a ball screw (14b) screwed into the nut member (14a), and a Y-axis feed motor (14e) coupled to the ball screw (14b), and wherein the Y-axis feed motor (14e) and the ball screw (14b) are disposed in parallel with the ram (11), and when viewed in the direction orthogonal to the Y-axis, the lower end portion (11 d) of the ram (11) and most of the ball screw (14b) and the Y-axis feed motor (14e) are disposed in an escape opening formed in the base member (8) in a mutually lapping manner.

4. The machine tool according to claim 1,wherein a ram guide (11a) supporting said ram (11) in a slidable manner is formed from said slide base (9) in a protruding manner in the Y-axis direction, the protruded portion having a circular shape when viewed in transverse section.

5. The machine tool according to claim 4, wherein a cylindrical guide cover (11c) surrounding an outer peripheral of the ram guide (11a) is fitted to the ram guide (11a) in an axially slidable manner and an upper end portion of the guide cover (11c) is connected and fixed to the turret body (12) being mounted onto the ram (11) or an upper end portion of the tram (11).

6. The machine tool according to claim 1, wherein the ram (11) has a polygonal shape and faces composing plural sides of the polygon are slide faces, slider mounting faces are formed on an inner peripheral face of the ram guide (11a), and sliders (11 b) are mounted onto the slider mounting faces in parallel with the slide faces.

## Patentansprüche

1. Werkzeugmaschine, aufweisend: ein Bett (2) von geneigter Art, das in einer Weise geneigt ist, dass eine nahe Seite desselben niedriger wird, wenn von einer Vorderseite der Maschine gesehen; einen Spindel- Reitstock (3), angeordnet an einem Seitenabschnitt des Betts (2); einen ersten Revolver (5), angeordnet an einem unteren Abschnitt, positioniert an der nahen Seite des Betts (2) in einer bewegbaren Weise in einer Richtung der X- Achse, die zu einer Achslinie des Spindel- Reitstocks (3) rechtwinklig ist, und in einer Richtung der Z- Achse, parallel mit der Achslinie; und einen zweiten Revolver (6), angeordnet an einer höheren Position, positioniert an einer entfernten Seite des Betts (2) in einer bewegbaren Weise in der Richtung der X-Achse und der Richtung der Z- Achse, wobei der erste Revolver (5) ein Basisteil (8) enthält, angeordnet auf dem Bett (2) in einer in der Richtung der Z- Achse bewegbaren Weise, eine Schlittenbasis (9), angeordnet auf dem Basisteil (8) in einer in der Richtung der X- Achse bewegbaren Weise, ein Paar von X- Achsen- Zuführvorrichtungen (10, 10), die die Schlittenbasis (9) in Richtung der X- Achse bewegen, **dadurch gekennzeichnet, dass** der erste Revolver einen Schieber (11) enthält, angeordnet an einem Abschnitt der Schlittenbasis (9) und zwischen dem Paar der X- Achsen- Zuführvorrichtungen (10, 10) in einer bewegbaren Weise in einer Richtung einer Y- Achse, die zu einer Ebene, die die X- Achse und die Z- Achse enthält, rechtwinklig ist, und einen Revolverkörper (12) und einen Revolverkopf (13), montiert an dem Schieber (11).

2. Werkzeugmaschine nach Anspruch 1, wobei eine Y- Achsen- Antriebseinheit (14), die den Schieber (11) in der Richtung der Y- Achse bewegt, mit einem unteren Endabschnitt (11 d) des Schiebers (11) gekuppelt ist und die Y- Achsen- Antriebseinheit (14) zwischen der rechten und linken X- Achsen- Zuführvorrichtungen (10, 10) angeordnet ist.

3. Werkzeugmaschine nach Anspruch 2, wobei eine Y- Achsen- Antriebseinheit (14) ein Mutternteil (14a) enthält, befestigt an dem unteren Endabschnitt (11d) des Schiebers (11), eine Kugelspindel (14b), geschraubt in das Mutternteil (14a), und einen Y- Achsen- Zuführmotor (14e), gekuppelt mit der Kugelspindel (14b), und wobei ein Y- Achse- Zuführmotor (14e) und die Kugelspindel (14b) parallel zu dem Schieber (11) angeordnet sind, und, wenn gesehen in der Richtung rechtwinklig zu der Y- Achse, der untere Endabschnitt (11 d) des Schiebers (11) und der überwiegende Teil der Kugelspindel (14b) und der Y- Achsen Zuführmotor (14e) in einer Austrittsöffnung, gebildet in dem Basisteil (8) in einer wechselseitig überlappenden Weise, angeordnet sind.

4. Werkzeugmaschine nach Anspruch 1, wobei eine Schieberführung (11a), die den Schieber (11) in einer gleitbaren Weise lagert, von der Schlittenbasis (9) in einer in der Richtung der Y- Achse vorspringenden Weise gebildet ist, wobei der vorspringende Abschnitt eine kreisförmige Form hat, wenn im Querschnitt gesehen.

5. Werkzeugmaschine nach Anspruch 4, wobei eine zylindrische Führungsabdeckung (11c), die den äußeren Umfang der Schieberführung (11a) umgibt, in die Schieberführung (11a) in einer axial gleitbaren Weise eingesetzt ist und ein oberer Endabschnitt der Führungsabdeckung (11c) verbunden ist mit und befestigt ist an dem Revolverkörper (12) , der auf dem Schieber (11) oder einem oberen Endabschnitt des Schiebers (11) montiert ist.

6. Werkzeugmaschine nach Anspruch 1, wobei der Schieber (11) eine polygonale Form hat und Flächen, die mehrfache Seiten des Polygons bilden, Gleitflächen sind, wobei Schlittenmontageflächen auf einer inneren Umfangsfläche der Schieberführung (11a) gebildet sind, und Schlitten (11b) auf den Schlittenmontageflächen parallel mit den Schlittenflächen gebildet sind.

## Revendications

1. Machine-outil comprenant : un banc (2) de type incliné qui est incliné d'une manière telle qu'un côté proche de celui-ci est plus bas lorsqu'il est vu à partir d'un côté avant de la machine ; une poupée fixe à broche (3) disposée au niveau d'une partie latérale dudit banc (2) ; une première tourelle (5) disposée au niveau d'une partie inférieure positionnée du côté proche dudit banc (2) d'une manière mobile dans une direction d'axe X qui est orthogonale à une ligne d'axe de ladite poupée fixe à broche (3) dans une direction d'axe Z qui est parallèle à la ligne d'axe ; et une deuxième tourelle (6) disposée au niveau d'une partie supérieure positionnée d'un côté distant dudit banc (2) d'une manière mobile dans la direction d'axe X et dans la direction d'axe Z, dans laquelle
ladite première tourelle (5) comprend un élément de base (8) disposé sur ledit banc (2) d'une manière mobile dans la direction d'axe Z, une base coulissante (9) disposée sur l'élément de base (8) d'une manière mobile dans la direction d'axe X, deux mécanismes d'avance d'axe X (10 ; 10) déplaçant la base coulissante (9) dans la direction d'axe X, **caractérisée en ce que** ladite première tourelle comprend un coulisseau (11) disposé au niveau d'une partie de la base coulissante (9) et entre lesdits deux mécanismes d'avance d'axe X (10, 10) d'une manière mobile dans une direction d'axe Y qui est orthogonale à un plan comprenant l'axe X et l'axe Z, et un corps de tourelle (12) et une tête de tourelle (13) montés sur le coulisseau (11).

2. Machine-outil selon la revendication 1, dans laquelle une unité d'entraînement d'axe Y (14) déplaçant le coulisseau (11) dans la direction d'axe Y est couplée à une partie d'extrémité inférieure (11d) du coulisseau (11) et l'unité d'entraînement d'axe Y (14) est disposée entre les mécanismes d'avance d'axe X droit et gauche (10, 10).

3. Machine-outil selon la revendication 2, dans laquelle ladite unité d'entraînement d'axe Y (14) comprend un élément d'écrou (14a) fixé à la partie d'extrémité inférieure (11d) du coulisseau (11), une vis à bille (14b) vissée dans l'élément d'écrou (14a), et un moteur d'avance d'axe Y (14e) couplé à la vis à bille (14b), et
dans laquelle le moteur d'avance d'axe Y (14e) et la vis à bille (14b) sont disposés parallèlement au coulisseau (11), et lorsqu'elle est vue dans la direction orthogonale à l'axe Y, la partie d'extrémité inférieure (11d) du coulisseau (11) et la majeure partie de la vis à bille (14b) et du moteur d'avance d'axe Y (14e) sont disposées dans une ouverture d'échappement formée dans l'élément de base (8) d'une manière mutuellement enveloppante.

4. Machine-outil selon la revendication 1, dans laquelle un guide de coulisseau (11a) supportant ledit coulisseau (11) d'une manière coulissante est formé à partir de ladite base coulissante (9) d'une manière saillante dans la direction d'axe Y, la partie saillante ayant une forme circulaire lorsqu'elle est vue en coupe transversale.

5. Machine-outil selon la revendication 4, dans laquelle un capot de guide (11c) cylindrique entourant une périphérie extérieure du guide de coulisseau (11a) est monté sur le guide de coulisseau (11a) d'une manière coulissante axialement et une partie d'extrémité supérieure du capot de guide (11c) est reliée et fixée au corps de tourelle (12) qui est monté sur le coulisseau (11) ou une partie d'extrémité supérieure du coulisseau (11).

6. Machine-outil selon la revendication 1, dans laquelle le coulisseau (11) a une forme polygonale et des faces composant plusieurs côtés du polygone sont des faces de coulissement, des faces de montage d'élément de coulissement sont formées sur une face périphérique intérieure du guide de coulisseau (11a), et des éléments de coulissement (11b) sont montés sur les faces de montage d'élément de coulissement parallèlement aux faces de coulissement.
